# EUROPEAN PATENT APPLICATION

(11) **EP 3 407 567 A1**
(43) Date of publication of application: **28.11.2018**
(21) Application number: 17173033.6
(22) Date of filing: 26.05.2017
(51) Int. Cl.: H04L 29/08, H04W 4/00

(54) **APPLICATION DEPLOYMENT IN INDUSTRIAL INTERNET OF THINGS**

(71) Applicant: ABB Schweiz AG, 5400 Baden (CH)
(72) Inventor: Ylinen, Johannes Eerikki, 02360 Espoo (FI); Luotojarvi, Mika, 02730 Espoo (FI); Hyttinen, Riku Antero, 04230 Kerava (FI)
(74) Representative: Kolster Oy Ab

(57) **Abstract**

A gateway or corresponding computing device acting as a gateway in an IoTSP system, for example, is provided with one or more application configurations, an application configuration being associated with or included in one or more information models, an information model describing metadata and properties of a Thing it models. When the gateway receives type information from a Thing not yet connected to the gateway, it determines corresponding information model; causes sending one or more application configuration associated with or included in the information model to the Thing; creates an instance for the Thing; and associates the instance with the information model.

## Description

### FIELD

The present invention relates to application deployment in the Industrial Internet of Things.

### BACKGROUND ART

The evolvement of networking between computers and computing devices, especially different sensors, capable of communicating over the Internet without user involvement, has led to the so-called Internet of Things intended for domestic appliances, as well as the Industrial Internet of Things intended for professional/enterprise use. The Industrial Internet of Things is a network concept which connects an industrial Thing and its embedded sensor(s), for example, with the Internet for open information exchange and communication. This is done in order to achieve tracking, monitoring and management of the Thing, for example. It has been estimated that the number of Internet-connected devices is likely to multiply to tens of billions. Since each connected device requires at least one application, an increasing number of Internet-connected devices inherently increases the amount of applications, thereby highlighting the importance of smooth application update deployment.

### SUMMARY

An object of the present invention is to automate application update deployment. The object of the invention is achieved by a method, a computer program product, a gateway node and a system, which are characterized by what is stated in the independent claims. The preferred embodiments of the invention are disclosed in the dependent claims.

A general aspect of the invention uses one or more information models to deploy one or more applications.

### BRIEF DESCRIPTION OF THE DRAWINGS

In the following, exemplary embodiments will be described in greater detail with reference to accompanying drawings, in which
Figure 1 shows simplified architecture of a system;
Figure 2 is a block diagram of an exemplified apparatus;
Figure 3 is a schematic diagram illustrating a part of an IoTSP (Internet of Things, Services and People) system;
Figure 4 illustrates information exchange;
Figures 5 and 6 are flow charts illustrating exemplary functionalities; and
Figure 7 is a schematic block diagram.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any system implementing central management and edge computing to data collected by the Industrial Internet of Things, or a corresponding industrial system generating data. Different embodiments and examples are described below, assuming that the concepts called cloud computing and virtualization are used, without restricting the embodiments/examples to such a solution. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In cloud computing network devices, computing devices and/or storage devices provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment.

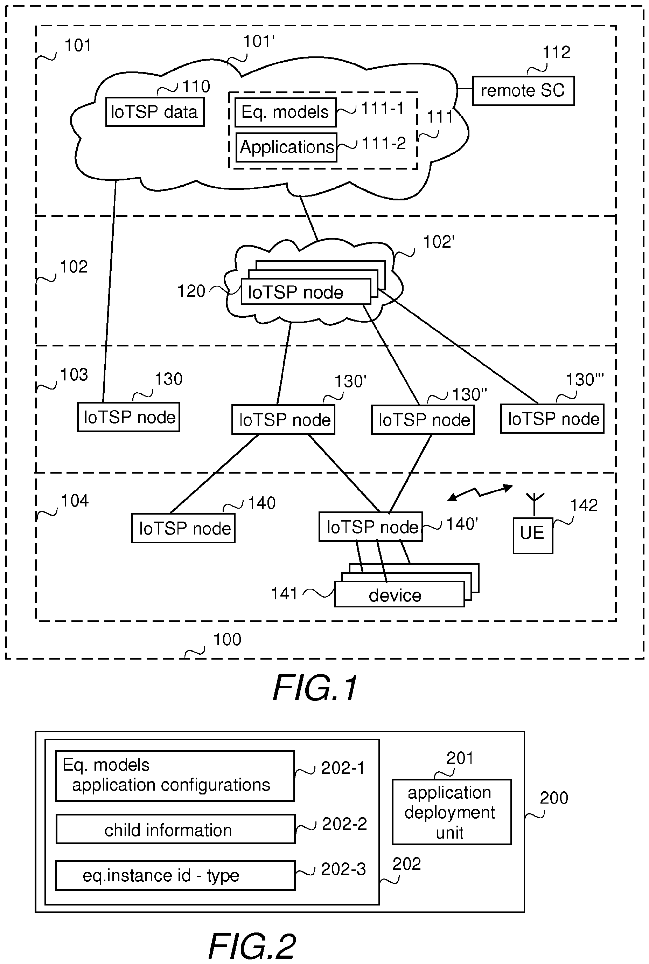

A general exemplary architecture of a system is illustrated in Figure 1. Figure 1 is a simplified system architecture only showing some devices, apparatuses and functional entities, all being logical units whose implementation and/or number may differ from what is shown. The connections shown in Figure 1 are logical connections; the actual physical connections may be different. Data collection may use so-called master protocols (a master is also known as a protocol client) in which a network node subscribes data from slaves (devices whose data it wants to have), and/or slave protocols (a slave is also known as a protocol server) in which a device/network node sends its data without any specific subscription to the receiver (slave/server). It is apparent to a person skilled in the art that the systems also comprise other nodes (apparatuses, devices), functions and structures used in or for the Industrial Internet of Things, big data, virtualization, data management, and communication in the system or in one part of the system. They, as well as the protocols used, are well known by persons skilled in the art and are irrelevant to the actual invention. Therefore, they do not need to be discussed in more detail here.

In the examples below, a concept called the Internet of Things, Services and People (IoTSP) is used as an example of the Industrial Internet of Things, without restricting the examples to such a concept. Furthermore, an equipment model is used below as an example of an information model, without restricting the example to the equipment model. It is obvious to one skilled in the art how to implement the disclosed principles, when other information models, such as information models relating to production transactions, are used.

In the example illustrated in Figure 1, the system 100 comprises four different hierarchical levels: a global cloud level 101 forming a level for central management, then one or more enterprise levels 102 (only one depicted in Figure 1), one or more plant levels 103 (only one depicted in Figure 1), and one or more device levels 104 (only one depicted in Figure 1), which depicts a level for different "Things". It should be appreciated that any other level structure and/or hierarchy may be used between the device level 104 and the global cloud level 101.

The global cloud level 101 comprises a global cloud 101' that comprises data 110 (IoTSP data) originating from the Things. The data 110 may comprise raw data and/or analysis data. Furthermore, the global cloud 101' comprises a global equipment model repository 111, which comprises a plurality of equipment models 111-1 and, in the illustrated example, a plurality of applications 111-2.

An equipment model describes metadata for interpreting semantics of an equipment (a piece of equipment). In other words, the equipment model describes properties of an equipment it models, and it is a kind of a virtual equipment type, or type definitions, to provide specific functionality desired. The term "equipment" or "equipment instance" means herein a virtual representation of a Thing. An equipment instance contains actual property values of properties of a Thing, while the equipment model describes the information model and metadata of the properties. There may be different equipment models for different hierarchy levels. The equipment model contains definitions, such as description, unit, aggregation rules, and the data collection protocol with sampling rules, for each property in the model. For example, an equipment model may comprise following definitions:
- Name of the model
- Link to owner of the model and other documentation
- Version number of the model
- Possible inheritance from another model
- Property definitions that may contain for each property: data type of the property (float, integer, text, array of something, etc.), scalar or time series, unit, value range, type of histories to be collected (storage, aggregation rules, such as time averages, standard deviation, min/max, operating time, etc.), data acquisition definitions (protocol, item id, collection cycles, etc.), and alarm limits. Furthermore, the property definitions may contain rules or definitions on how to map local data in a device/node to the model properties. An example of mapping definitions includes defining from which variable, register, or memory location the data in the device is read to a particular property value, and how frequently.
- Function definitions that describe which kind of functions the device can perform
- Interface definitions for exposing model-specific application programming interfaces (APIs)

An application may be developed against one or more equipment models (or information models). The application may be implemented as an internal part of an equipment model, and the equipment model itself may be interpreted to be an application. The application may be stored as a separate entity, associated with information on equipment models whereto apply the application, by using definitions within an equipment model as references whereto the application configuration is inputted, and/or wherefrom information for further processing is obtained. This means that the data acquisition and application logic are using the equipment properties as references to read and write data on the Thing, and functions to perform operation(s) in the Thing. Naturally, the application as a whole may be part of one or more equipment models.

In other words, an application may contain one or more of the following: equipment model(s), data acquisition, access to various kinds of data, application logic, actions, and user interaction, such as visualization, reporting, and user-entered data. The application logic may be any type of calculation or analytics. The application logic may use values of equipment instance properties, including time series measured signal data, events and alarms, and other types of structural and non-structural data from the Thing or from other data sources. The application logic may produce any kind of data, such as key performance indicators and/or values of some other type, such as time series measured signal data, events and alarms, and other types of structural and non-structural data. The application logic may also perform fleet analytics, and/or analytics over some other dimension, such as energy efficiency or customer processes, over several equipment instances, based on the same equipment model and/or different equipment models. The produced data may be stored in the same and/or in another equipment instance.

Once an application is ready to be deployed (i.e. the application has been approved after passing checking and testing), its installation, monitoring and maintenance can be taken care of centrally, by means of the interface definitions in equipment model(s), and application configurations introduced to an equipment model by one or more property definitions and/or by one or more function definitions. For example, an application configuration may contain parameters for calculations and dashboard definitions for visualizing raw data and/or calculated data. Naturally, one equipment model may comprise one or more application configurations for one or more applications, correspondingly, and one application may be installed to a plurality of different equipment models.

Although not illustrated in Figure 1, in addition to or included in the equipment models, also rules for data flows are defined. The rules may be called data flow rules, data transfer rules, or communication rules, for example. A data flow rule may define what data is to be sent from the gateway, and possibly when to send the data. A data flow rule may also define what kind of data will be received and/or how the data is to be converted, if conversion is needed, for example because of different equipment model definitions in use. It should be appreciated that the data flow rules are for data flows within the system, and notifications or different outputs on user interfaces, etc. are not within the definitions of the data flow rules. However, the way how data flows from the Things to the global cloud is organized bears no significance to how applications are deployed from the global cloud to the Things, and therefore there is no need to describe the implementation of data flows from a lower hierarchy to a higher hierarchy in more detail herein.

The model definitions for equipment models 111-1 may be according to ISA-95 type equipment model definitions, for example. ISA-95 is an ISO standard defining, among other things, standard terminology and information models, which can be used to define equipment models. It should be appreciated that any other model definitions for information models may be used as well.

In conclusion, one may say that the equipment model defines semantics for the data, controls the device data recording, and provides a basis for analytics and applications, as well as a basis for visualization, without detailed information on the actual device instances or signal names. The equipment model thereby provides tools for common information modelling and centrally managed application deployment for applications, whose data acquisition and application logic are using property definition(s) and/or whose functions are using the function definition(s) in the equipment model. This, in turn, provides that such applications (and their application configurations) can be applied to any number of equipment instances without instance-specific configuration.

Furthermore, as in the illustrated example, one or more remote service centers 112 (remote SC) are connected to the global cloud 101'. A remote service center may be used for defining or updating definitions of one or more equipment models 111-1, but it may also be used for other purposes. One example of another purpose includes defining data flow rules, if such rules are not included into the equipment model. Another example for another purpose includes that, in a multi-enterprise scenario, the remote service center may provide maintenance services to different enterprises as an analysis system or part of the analysis system, and each enterprise using the maintenance services has its own one or more levels below the global level 101. Naturally, the remote service centers 112 may be used for updating existing applications, including deletion of applications, as well as adding new applications.

The enterprise level 102 may comprise one or more enterprise level clouds 102', which in turn may comprise one or more gateways 120 (computing nodes), herein called IoTSP nodes. The gateways 120 in the enterprise level may provide an enterprise-wide service platform for applications, including equipment models and instances, data collection, enterprise analytics, and other application runtimes, for example.

The plant level 103 comprises a plurality of gateways 130, 130', 130", 130'" (computing nodes), herein called IoTSP nodes. The gateways 130, 130', 130", 130'" in the plant level may provide a plant-wide service platform for applications, including equipment models and instances, data collection, plant analytics, and other application runtimes, for example. The plant level may be implemented by use of one or more clouds, virtual machines, and/or physical computers. As can be seen in Figure 1, the gateways 130, 130', 130", 130'" in the plant level may be connected directly to the global cloud, and/or via one or more gateways in the enterprise level to the global cloud.

The device level 104 comprises, in addition to a plurality of devices 141, one or more gateways 140, 140' (computing nodes) whereto devices 141 are connected. The gateways 140, 140' in the device level may provide a device, system or production line wide service platform for applications, including equipment models and instances, data collection, analytics, and other application runtimes, for example. Although not illustrated in Figure 1, the gateways in the device level may be connected directly to the global cloud, or via one or more gateways in the enterprise level, or via one or more gateways in the device level, or, as illustrated in Figure 1, via a chain or chains of gateways in the plant level and enterprise level. It should be appreciated that, although illustrated only in the device level gateway, a gateway in any level may send data (transfer data) to a plurality of gateways (two, three, four, etc.) in higher levels. For example, one gateway may send data to gateways that represent different functional purposes, for example, one for asset monitoring and production tracking, and one for energy management.

In Figure 1, the devices 141 represent Things that the Industrial Internet of Things, or, as in the example, the Industrial Internet of Things, Services and People comprises. The Things may be different devices, machines, apparatuses, equipment, systems, sub-systems, processes, etc. A few examples of Things include a pump, motor, valve, car, fridge, production line, and a control loop. There are no restrictions to what constitutes a Thing. It suffices that the Thing comprises means for performing one or more different measurements on the environment and/or one or more operations, for example, and means for sending the information to at least one or more IoTSP nodes. Furthermore, a Thing may itself comprise Things that the analytics sees as one combined Thing. The implementation of the Industrial Internet of Things, data collected therefrom, and means used for information exchange, bear no significance to the invention, and therefore they are not described in more detail here. It is obvious for one skilled in the art that any known or future solution may be used.

Furthermore, in the illustrated example, a user (with proper access rights) at a local site may connect to gateways 140, 140' by means of his/her user equipment 142. It should be appreciated that, although not depicted in Figure 1, in each level a user may connect to a gateway by means of his/her user equipment, or via a corresponding service center to study, process, etc. data on the corresponding level. Furthermore, depending on the rights, the user equipment at any level may be configured to update, add, and/or delete applications, with the prerequisite that the user has access rights to it.

Although not illustrated in Figure 1, the connections may be over one or more networks, which may be of the same type or different types. The types of the network and protocols used bear no significance to the invention, and therefore are not described in more detail herein.

As said earlier, the hierarchy illustrated above depicts only one example. For example, at the device level there may be a gateway connected to a plurality of devices, and to one or more gateways that in turn are connected to a plurality of devices. Furthermore, gateways on the same level may be connected to each other. The hierarchical structure enables central management of equipment models, and thereby central management of applications (application configurations) associated with or included in the equipment models: the applications (application configurations) are being pushed from cloud to downwards in the hierarchy within corresponding equipment models and thereby will be deployable by IoTSP nodes (gateways) and by connected devices, as will be described in more detail below.

Summarizing the above, Figure 1 illustrates an IoTSP platform architecture that provides connectivity and drill-down data access through the levels to the required details, irrespective of the actual data storage. Furthermore, the IoTSP platform architecture provides means for integrated management and control of essential resources from the device level up to the global cloud. The main information flow directions are from the global cloud level to lower levels (from top to bottom), and from device level to upper levels (from bottom to top). Information propagated from top to bottom may include function calls (actions to be performed by devices), data and metadata that is controlling the data flows, analytics, and visualization (metadata including changes in the equipment models and data flow rules), retrieval of details, and actions to be performed in devices. Information sent from bottom to up typically includes measured signal and aggregated data organized according to the metadata. It should be appreciated that actual system topologies, integrations with external systems, etc., may differ based on industry requirements and products, for example.

Figure 2 is a generalized block diagram of a gateway 200, i.e. an IoTSP node, representing a gateway at any level described above with Figure 1. The gateway is a computing device (node) configured at least to send and/or receive data, either as a standalone device or embedded in an existing device. Depending on a gateway and its use, the gateway may be a small electrical device, a mobile device, a tablet, a laptop, a personal computer, or a server, just to mention some examples. Naturally, the gateway may include a data storage, and/or one or more user interfaces.

The gateway is configured to support application deployment. For this purpose, the gateway 2 illustrated in Figure 2 comprises one or more application deployment units 201, and in a memory 202 equipment models 202-1, comprising one or more applications, or more precisely application configurations, child information 202-2 and a list 202-3 associating identifying information 202-3 on a plurality of equipment instances with information identifying the type of the equipment model of the corresponding equipment instance. The application configurations in the equipment model typically define, as described above with Figure 1, one or more calculations that may be based from a simple algorithm to a very complicated algorithm, and/or what to visualize, based on the function definitions and/or property definitions in the equipment model, for example. Naturally, also in the gateway level, applications (application configurations) may be stored separately, with information associating an application with one or more equipment models whereto apply the associated application. To deploy applications in the gateway 200 and from the gateway, the child information 202-2 comprises, for each equipment model delivered from the gateway, information on one or more gateways directly connected to the gateway, and whereto the equipment model has been delivered (copied) from the gateway. It should be appreciated that a gateway in the device level may be without any child information 202-2. Correspondingly, a gateway in an upper level may be without any list 202-3 or corresponding information. Examples of functionalities of the application deployment unit, and how the information in the memory is used, will be described in more detail below.

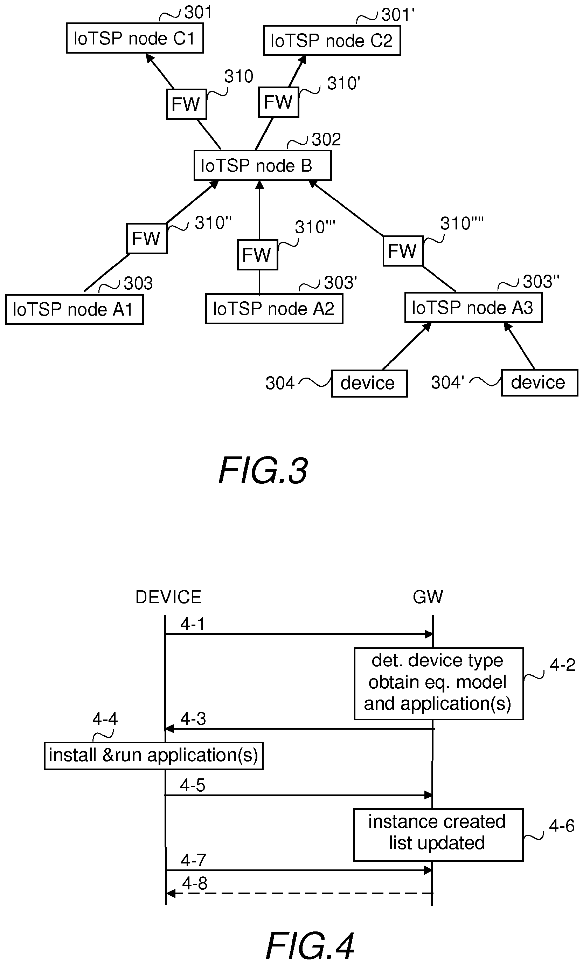

Figure 3 depicts a part of an IoTSP system, only illustrating a few gateways (nodes) and devices to describe one exemplary implementation of how data for application deployment may be pushed downwards.

Referring to Figure 3, the IoTSP nodes A1 303, A2 303' and A3 303" depicts gateways in a plant level, the IoTSP node B 302 depicts a gateway in an upper hierarchy level, and the IoTSP nodes C1 301 and C2 301' depict gateways in a further upper hierarchy level. Connections between the nodes are depicted by arrows. Furthermore, there exists one or more firewalls (FW) 310, 310', 310", 310"', 310"" between connected gateways (IoTSP nodes) 301, 301', 302, 303, 303', 303" for securing the IoTSP system.

In the illustrated example, the firewalls 310, 310', 310", 310"', 310"" are configured not to allow connections to southbound nodes, as depicted by directions indicated by arrow ends of the connections in Figure 3. This results in a situation, in which a connection from an industrial plant to a cloud is possible, but not from the cloud to a node at the industrial plant. However, all the connections are bidirectional so that when a node is connected to its northbound neighbour, the connection is also established backwards. This means that if the data flow rules define that data to be published is of type "in", meaning that the transfer direction (flow direction) is actually from the data receive service (northbound node) to the data transfer service (southbound node), the data receive service is configured to send the data backwards to the data transfer service in the southbound node. Device interfaces may be configured to behave similarly like the gateways for data flows.

As to the application deployment, including application update, the data to be published is of the type "in". More precisely, the properties and functions defining one or more applications are defined in the equipment model to be of the type "in", meaning that the data flow direction is from a gateway to a lower level gateway or device, i.e. southbound. For example, a data flow including an update to an application confirmation, or a new application (i.e. its configuration) may be from an IoTSP node C1 301 and/or from an IoTSP node C2 301' to an IoTSP node B 302, and therefrom to IoTSP nodes A1 303, A2 303' and A3 303", and therefrom to devices 304, 304'.

This means that if there is any change relating to definitions defining one or more applications in an equipment model, the gateway, or more precisely the data receive service in the gateway, starts sending the change (i.e. corresponding data) to the southbound connections. Herein the change includes also new applications. This means that data flows through one or more IoSTP nodes down to a proper level, which may mean that the data flows to the actual devices. For example, if a setpoint to a controller in a device is entered by a user using the remote service center in the cloud level to the corresponding equipment model, the setpoint is transferred gateway by gateway (i.e. IoSTP node by IoSTP node) finally down to each corresponding device for corresponding one or more controllers.

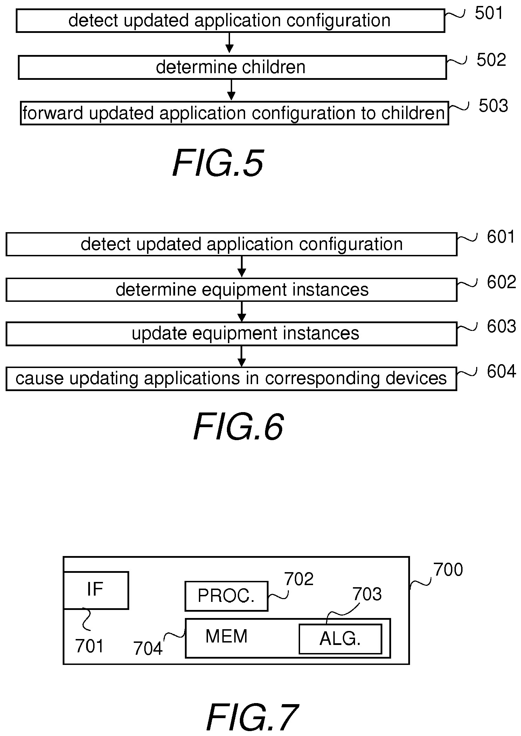

Basic functionality of the application deployment unit is described below with Figures 4, 5 and 6; Figure 4 illustrating when a new Thing (i.e. a device) is added to the system, and Figures 5 and 6 how updates to applications are taken care of. In the examples, it is assumed that equipment models are downloaded and updated to all gateways, so that the gateway comprises, in principle, all equipment models and associated applications.

Referring to Figure 4, when a device that is not yet connected to a gateway (GW) is connected to the gateway, the device sends in message 4-1 information on its type to the gateway.

Thanks to the type information in message 4-1, the gateway, or more precisely the application deployment unit in the gateway, determines in point 4-2 the device type. Then, using the information the gateway, or more precisely the application deployment unit in the gateway, obtains in point 4-2 amongst the plurality of the equipment models the equipment model that models the device. After that, application configuration(s) of one or more applications in the equipment model are sent in message 4-3 to the device. Hence, no pre-information or pre-installation, or initial installations of applications in the device are needed.

Upon receiving the application configuration(s), the device installs and starts to run it/them in point 4-4. Furthermore, the device creates to the gateway an instance of the device with a unique identifier (by one or more messages 4-5), and then feeds data to the instance in the gateway, illustrated by message 4-7 in Figure 4.

When the gateway, or more precisely the application deployment unit, receives the identifier in message 4-5, an association associating the identifier identifying the instance, and thereby device, with the equipment model identifier is added to a list, or any data structure used for storing associations. In other words, the list is updated in point 4-6, and naturally the instance for the device is created in point 4-6. Furthermore, any updates to the one or more applications, for example, relating to the equipment model may be pushed downwards, as depicted by message 4-8, and described in more detail with Figure 6.

It should be appreciated that the device in Figure 4 may be a new gateway added to the system, which in turn will then perform the above process with one or more devices (that may be gateways). Naturally, the device may be a new Thing.

In the example of Figure 5, it is assumed that the gateway is an intermediate gateway having no equipment instances relating to the application configuration processed. Furthermore, updated application configuration covers herein also new application configurations.

Referring to Figure 5, an updated application configuration is detected, for example in information pushed from an upper level gateway, in step 501 in an update to an equipment model. Therefore, gateways, herein called children, associated with the equipment model type in the child information in the memory of the gateway detecting the update, are determined in step 502. Then forwarding of the updated configuration to the children is caused in step 503.

It should be appreciated that in implementations, in which a so-called neighbouring information that comprises information on gateway's neighbours, i.e. information on gateways and possible other devices whereto the gateway is directly connected to, and also neighbour-specifically information/indication, whether the connection is for receiving data or for sending data is maintained, the neighbouring information may be used instead of the child information.

In the example of Figure 6, it is assumed that the gateway is a device-level gateway having no child information. Furthermore, also herein an updated application configuration covers new application configurations.

Referring to Figure 6, an updated application configuration is detected, for example in information pushed from an upper level gateway, in step 601 in an update to an equipment model. Therefore, equipment instances associated in the memory with the same equipment model type are determined in step 602. Then equipment instances, or more precisely corresponding applications in the instances, and thereby the associated devices, are updated in step 603 correspondingly to correspond to the updated configuration. Furthermore, updating of applications in corresponding devices is caused in step 604. Naturally, the corresponding application configuration in the memory of the gateway will be updated as well.

If the updated application configuration is for two or more equipment models, the steps described with Figures 5 and 6 are performed for each equipment model associated with the application configuration.

Furthermore, in a gateway there may be both child information and equipment instance information relating to the same equipment model (or application configuration, if stored separately). In such a situation, the gateway, or more precisely the application deployment unit in the gateway, performs both the functionality described with Figure 5 and the functionality described with Figure 6.

As is evident from the above, an application may be applied to any number of devices, and corresponding equipment instances, without any instance or device -specific configuration, and an update to the application is easily spread to all instances involved.

The steps, points, messages (i.e. information exchange) and related functions described above in Figures 4, 5 and/or 6 are in no absolute chronological order, and some of the steps may be performed simultaneously or in an order differing from the given one. Other functions can also be executed between the steps or within the steps, and other information may be sent. Examples of such information and functionality include data gathering/receiving and data analysis of the data originating from Things. Some of the steps or part of the steps can also be left out or replaced by a corresponding step or part of the step. For example, if the update to the application configuration do not affect the functionality of devices, but only the corresponding equipment instances, there is no need to send the update to the devices. An example of such an update is a change to data analysis.

The techniques described herein may be implemented by various means so that an apparatus/device implementing one or more functions described with an embodiment, or a combination of embodiments, comprises not only prior art means, but also specific means for implementing the one or more functions described with an embodiment and it may comprise separate means for each separate function, or specific means may be configured to perform two or more functions. The specific means may be software and/or software-hardware and/or hardware and/or firmware components (recorded indelibly on a medium such as read-only-memory, or embodied in hard-wired computer circuitry) or combinations thereof. Software codes may be stored in any suitable, processor/computer-readable data storage medium(s) or memory unit(s) or article(s) of manufacture, and executed by one or more processors/computers, hardware (one or more apparatuses), firmware (one or more apparatuses), software (one or more modules), or combinations thereof. For a firmware or software, implementation can be through modules (e.g. procedures, functions, and so on) that perform the functions described herein.

Figure 7 is a simplified block diagram illustrating some units for a device (an apparatus) 700 configured to be a gateway for IoTSP, or a corresponding computing device, comprising at least one or more application deployment units described above with Figures 1 to 6 or corresponding functionality or some of the corresponding functionality, if functionalities are distributed in the future. In the illustrated example, the device comprises one or more interfaces (IF) 701 for receiving and/or retrieving and/or transmitting information from or to other devices, and possibly from or to a user, a processor 702 configured to implement the application deployment unit, described herein, or at least part of corresponding functionality as a sub-unit functionality if distributed scenario is implemented, with corresponding algorithms 703, and memory 704 usable for storing a computer program code required for the one or more application deployment unit, or for one or more corresponding units or sub-units, i.e. the algorithms for implementing the functionality. The memory 704 is also usable for storing other possible information, like the configurations, white list, reporting rules, equipment models, telemetry data, firewall data, etc.

In other words, a device (apparatus) configured to provide the gateway for IoTSP, or a device/apparatus configured to provide one or more corresponding functionalities described above with Figures 1 to 6, is a computing device that may be any apparatus or device or equipment or node configured to perform one or more of the corresponding device functionalities described with an embodiment/example/implementation, and it may be configured to perform functionalities from different embodiments/examples/implementations. The one or more application deployment unit, as well as corresponding units and sub-units may be separate units, even located in another physical apparatus, the distributed physical apparatuses forming one logical apparatus/device providing the functionality, or integrated to another unit in the same apparatus/device.

The device/apparatus configured to provide the gateway for IoTSP, or a device configured to provide one or more corresponding functionalities may generally include a processor, controller, control unit, micro-controller, or the like connected to a memory and to various interfaces of the apparatus. Generally, the processor is a central processing unit, but the processor may be an additional operation processor. The unit, or each or some or one of the units/sub-units and/or algorithms described herein may be configured as a computer or a processor, or a microprocessor, such as a single-chip computer element, or as a chipset, including at least a memory for providing storage area used for arithmetic operation and an operation processor for executing the arithmetic operation. The unit, or each or some or one of the units/sub-units and/or algorithms described above may comprise one or more computer processors, application-specific integrated circuits (ASIC), digital signal processors (DSP), digital signal processing devices (DSPD), programmable logic devices (PLD), field-programmable gate arrays (FPGA), logic gates and/or other hardware components that have been programmed and/or will be programmed by downloading computer program code (one or more algorithms) in such a way to carry out one or more functions of one or more embodiments/implementations/examples. An embodiment provides a computer program embodied on any client-readable distribution/data storage medium or memory unit(s) or article(s) of manufacture, comprising program instructions executable by one or more processors/computers, which instructions, when loaded into a device, constitute the application deployment unit, or any sub-unit. Programs, also called program products, including software routines, program snippets constituting "program libraries", applets and macros, can be stored in any medium, and may be downloaded into an apparatus. In other words, the unit or each or some or one sub-units and/or the algorithms described above may be an element that comprises one or more arithmetic logic units, a number of special registers, and control circuits.

Furthermore, the device/apparatus configured to provide the gateway for IoSTP, or a device configured to provide one or more corresponding functionalities, described above with Figures 1 to 6, may generally include volatile and/or non-volatile memory, for example EEPROM, ROM, PROM, RAM, DRAM, SRAM, double floating-gate field effect transistor, firmware, programmable logic, etc., and typically store content, data, or the like. The memory or memories may be of any type (different from each other), have any possible storage structure and, if required, be managed by any database management system. In other words, the memory, or part of it, may be any computer-usable non-transitory medium within the processor/apparatus or external to the processor/apparatus, in which case it can be communicatively coupled to the processor/apparatus via various means as is known in the art. Examples of an external memory include a removable memory detachably connected to the apparatus, a distributed database, and a cloud server. The memory may also store computer program code such as software applications (for example, for the unit or for the one or more sub-units/algorithms) or operating systems, information, data, content, or the like for the processor to perform steps associated with operation of the apparatus, in accordance with the examples/embodiments.

It will be obvious to a person skilled in the art that, as technology advances, the inventive concept can be implemented in various ways. The invention and its embodiments are not limited to the examples described above, but may vary within the scope of the claims.

## Claims

1. A computerized method comprising:
providing a computing device acting as a gateway in a system comprising plurality Things in an Industrial Internet of Things with one or more application configurations, an application configuration being associated with or included in one or more information models, an information model describing metadata and properties of a Thing it models;
determining, in response to receiving type information from a Thing not yet connected to the computing device, by the computing device corresponding information model;
causing sending from the computing device one or more application configurations associated with or included in the information model to the Thing;
creating an instance for the Thing in the computing device; and
associating the instance with the information model.

2. A computerized method as claimed in claim 1,
detecting, by the computing device, an update to an application configuration;
determining, by the computing device, one or more information models associated with the application configuration;
determining, by the computing device, one or more instances associated with the one or more information models; and
updating, by the computing device, the one or more instances and/or the application configuration in one or more Things corresponding to the one or more instances.

3. A computerized method as claimed in claim 1 or 2, further comprising:
causing sending from the computing device the one or more application configuration with the one or more information models to one or more further computing devices acting as gateways in the system; and
maintaining, by the computing device, as child information, information on the further computing devices.

4. A computerized method as claimed in claim 3, further comprising:
detecting, by the computing device, an update to an application configuration;
using, by the computing device, the child information to determine further computing devices whereto forward the update; and
forwarding, by the computing device, the update to the application configuration to the determined further computing devices.

5. A computer program product comprising program instructions, which, when run on a computing apparatus, causes the computing apparatus to perform a method as claimed in any preceding claim.

6. A gateway node comprising means for implementing a method as claimed in any of claims 1 to 4.

7. A system forming an Industrial Internet of Things, the system comprising:
a plurality of Things;
a plurality of first gateway nodes, a first gateway node comprising means for receiving one or more application configurations, an application configuration being associated with or included in one or more information models, an information model describing metadata and properties of a Thing it models, means for sending the one or more application configuration with the one or more information models to one or more further gateway nodes, a further gateway node being another first gateway node or a second gateway node, and means for storing information on the one or more further gateway nodes as child information; and
a plurality of second gateway nodes, a second gateway node comprising means for receiving and storing the one or more application configurations with the one or more information models, means for receiving type information from a Thing not yet connected to the second gateway, means for determining, based on the type information, corresponding information model, means for sending one or more application configuration associated with or included in the information model to the Thing; means for creating an instance for Thing, and means for associating the instance with the information model;
wherein a Thing comprises means for connecting to a second gateway, means for sending type information to the second gateway node the Thing connects to, means for receiving application configuration from the second gateway node and means for installing and running a corresponding application.

8. A system as claimed in claim 7, wherein, in response to an update to an application configuration,
the first gateways are configured to forward the update using the child information;
the second gateways are configured to determine instances associated with the information model the application that is updated relates to, and to update the instances and/or forward the update to corresponding Things; and
the Things are configured, in response to receiving the update, to update the application.
